# EUROPEAN PATENT APPLICATION

(11) **EP 4 624 242 A2**
(43) Date of publication of application: **01.10.2025**
(21) Application number: 25165553.6
(22) Date of filing: 24.03.2025
(51) Int. Cl.: B60L 58/27

(54) **CONTROL METHOD AND CIRCUIT, VEHICLE CONTROLLER, AND ELECTRIC VEHICLE**

(30) Priority: 29.03.2024 CN 202410385848
(71) Applicant: BYD Company Limited, Shenzhen, Guangdong 518118 (CN)
(72) Inventor: LING, Heping, 518118 Shenzhen (CN); YAN, Lei, 518118 Shenzhen (CN); CHEN, Yuxi, 518118 Shenzhen (CN); LI, Tao, 518118 Shenzhen (CN); LI, Ke, 518118 Shenzhen (CN)
(74) Representative: Mathys & Squire

(57) **Abstract**

The present disclosure discloses a control method and circuit, a vehicle controller, and an electric vehicle. The control circuit may include a first switch control unit, a second switch control unit, and an inductive component unit arranged between the first switch control unit and the second switch control unit. Switch transistors in the first switch control unit and the second switch control unit are alternately turned on and off in a predetermined sequence, to self-heat a battery through charging and discharging of the inductive component unit, thereby avoiding affecting charging and discharging power of the battery in a low-temperature environment.

## Description

### FIELD

The present disclosure relates to the field of electric vehicles, and specifically, to a control method and circuit, a vehicle controller, and an electric vehicle.

### BACKGROUND

As a promising green means of transportation, electric vehicles are gaining popularity at an exceptional pace. One of the key factors affecting the development of electric vehicles is batteries. Most electric vehicles use lithium-ion batteries as their power providing apparatus.

However, due to the large polarization of a lithium-ion battery in a low-temperature environment, charging and discharging characteristics of the lithium-ion battery are poor, which affects charging and discharging power of the battery.

### SUMMARY

The present disclosure provides a control method and circuit, a vehicle controller, and an electric vehicle. The control circuit can self-heat a battery, thereby avoiding affecting charging and discharging power of the battery in a low-temperature environment.

According to an embodiment of the present disclosure, a control circuit is provided. The control circuit includes:
a first switch control unit and a second switch control unit; and
an inductive component unit arranged between the first switch control unit and the second switch control unit.

Switch transistors in the first switch control unit and the second switch control unit are alternately turned on and off in a predetermined sequence, to self-heat a battery through charging and discharging of the inductive component unit.

Optionally, the first switch control unit and the second switch control unit each include an upper bridge switch transistor and a lower bridge switch transistor, a first node is provided between the upper bridge switch transistor and the lower bridge switch transistor in the first switch control unit, a second node is provided between the upper bridge switch transistor and the lower bridge switch transistor in the second switch control unit, and the inductive component unit is connected between the first node and the second node.

Optionally, in a case that the upper bridge switch transistor in the first switch control unit is turned on, the lower bridge switch transistor in the second switch control unit is turned on. The lower bridge switch transistor in the first switch control unit and the upper bridge switch transistor in the second switch control unit remain off. In a case that the lower bridge switch transistor in the first switch control unit is turned on, the upper bridge switch transistor in the second switch control unit is turned on. The upper bridge switch transistor in the first switch control unit and the lower bridge switch transistor in the second switch control unit remain off.

Optionally, the inductive component unit includes a winding of a first motor, a first switch, and a winding of a second motor, and the first switch is connected between a winding neutral point of the first motor and a winding neutral point of the second motor. In a case that the first switch is closed, the winding of the first motor and the winding of the second motor are charged and discharged based on the alternate turning on and off of the switch transistors in the first switch control unit and the second switch control unit.

Optionally, the first switch control unit is a drive control circuit of the first motor, and the second switch control unit is a drive control circuit of the second motor.

Optionally, when at least one upper bridge switch transistor in the drive control circuit of the first motor is turned on, at least one lower bridge switch transistor in the drive control circuit of the second motor is turned on. When at least one lower bridge switch transistor in the drive control circuit of the first motor is turned on, at least one upper bridge switch transistor in the drive control circuit of the second motor is turned on.

Optionally, the control circuit further includes:
a precharging unit, connected to a direct current bus after being connected in series to the battery, to precharge a bus capacitor connected to the direct current bus based on power supply from the battery.

Optionally, the control circuit further includes:
a boost unit, configured to boost a voltage output by an external charging device, to charge the battery.

Optionally, the boost unit includes:
a boost inductor, one end of the boost inductor being connected to a positive terminal of the external charging device; and
a third switch control unit, a third node being provided between an upper bridge switch transistor and a lower bridge switch transistor in the third switch control unit, and the third node being connected to the other end of the boost inductor.

The upper bridge switch transistor and the lower bridge switch transistor in the third switch control unit are alternately turned on and off, to boost the voltage output by the external charging device.

Optionally, the boost inductor is a winding of a third motor, the third switch control unit is a drive control circuit of the third motor, a winding neutral point of the third motor is connected to the positive terminal of the external charging device through a first charging switch, and a negative terminal of the drive control circuit of the third motor is connected to a negative terminal of the external charging device through a second charging switch.

In a case that the first charging switch and the second charging switch are closed, an upper bridge switch transistor and a lower bridge switch transistor on a same bridge arm in the drive control circuit of the third motor are alternately turned on and off, for the external charging device to boost charge the battery.

Optionally, the control circuit further includes:
a third charging switch, one end of the third charging switch being connected to a positive direct current bus, and the other end of the third charging switch being connected to the positive terminal of the external charging device.

In a case that the second charging switch and the third charging switch are closed, the external charging device directly charges the battery.

According to an embodiment of the present disclosure, a control method is provided. The control method includes:
controlling, in response to a battery self-heating instruction, switch transistors in a first switch control unit and a second switch control unit to be alternately turned on and off in a predetermined sequence, to self-heat a battery through charging and discharging of an inductive component unit, where the inductive component unit is arranged between the first switch control unit and the second switch control unit.

Optionally, the controlling switch transistors in a first switch control unit and a second switch control unit to be alternately turned on and off in a predetermined sequence includes:
in a case that the upper bridge switch transistor in the first switch control unit is turned on, the lower bridge switch transistor in the second switch control unit is turned on, where the lower bridge switch transistor in the first switch control unit and the upper bridge switch transistor in the second switch control unit remain off; and
in a case that the lower bridge switch transistor in the first switch control unit is turned on, the upper bridge switch transistor in the second switch control unit is turned on, where the upper bridge switch transistor in the first switch control unit and the lower bridge switch transistor in the second switch control unit remain off.

Optionally, the controlling switch transistors in a first switch control unit and a second switch control unit to be alternately turned on and off in a predetermined sequence includes:
when at least one upper bridge switch transistor in the drive control circuit of the first motor is turned on, at least one lower bridge switch transistor in the drive control circuit of the second motor is turned on; and when at least one lower bridge switch transistor in the drive control circuit of the first motor is turned on, at least one upper bridge switch transistor in the drive control circuit of the second motor is turned on.

The first switch control unit is the drive control circuit of the first motor, and the second switch control unit is the drive control circuit of the second motor.

Optionally, the method further includes:
controlling a precharging unit in response to a precharging instruction, to precharge a bus capacitor connected to a direct current bus based on power supply from the battery.

Optionally, the method further includes:
controlling a boost unit to boost a voltage output by an external charging device in response to a boost charging instruction, to charge the battery.

Optionally, the controlling a boost unit to boost a voltage output by an external charging device includes:
controlling an upper bridge switch transistor and a lower bridge switch transistor in a third switch control unit of the boost unit to be alternately turned on and off, to boost the voltage output by the external charging device.

Optionally, the controlling an upper bridge switch transistor and a lower bridge switch transistor in a third switch control unit of the boost unit to be alternately turned on and off includes:
controlling a first charging switch and a second charging switch to be closed; and
controlling an upper bridge switch transistor and a lower bridge switch transistor on a same bridge arm in a drive control circuit of a third motor to be alternately turned on and off.

A boost inductor in the boost unit is a winding of the third motor, and the third switch control unit is the drive control circuit of the third motor.

Optionally, the method further includes:
controlling, in response to a direct charging instruction, the second charging switch and a third charging switch to be closed, for the external charging device to directly charge the battery.

According to an embodiment of the present disclosure, a computer-readable storage medium is provided. The computer-readable storage medium has a computer program stored therein. The computer program, when executed by a processor, implements the foregoing control method.

According to an embodiment of the present disclosure, a vehicle controller is provided. The vehicle controller includes: a memory, a processor, and a computer program stored in the memory and executable on the processor. The processor, when executing the computer program, implements the foregoing control method.

According to an embodiment of the present disclosure, an electric vehicle is provided. The electric vehicle includes: the foregoing control circuit; or the foregoing vehicle controller.

In conclusion, the embodiments of the present disclosure provide a control method and circuit, a vehicle controller, and an electric vehicle. The control circuit may include a first switch control unit, a second switch control unit, and an inductive component unit arranged between the first switch control unit and the second switch control unit. Switch transistors in the first switch control unit and the second switch control unit are alternately turned on and off in a predetermined sequence, to self-heat a battery through charging and discharging of the inductive component unit, thereby avoiding affecting charging and discharging power of the battery in a low-temperature environment.

Other aspects and advantages of the present disclosure are given in the following description, some of which become apparent from the following description or may be learned from practices of the present disclosure.

### BRIEF DESCRIPTION OF THE DRAWINGS

FIG. 1 is a schematic structural diagram of an electric vehicle according to an embodiment of the present disclosure;
FIG. 2 is a schematic structural diagram of another electric vehicle according to an embodiment of the present disclosure;
FIG. 3 is a schematic structural diagram of still another electric vehicle according to an embodiment of the present disclosure;
FIG. 4 is a schematic structural diagram of yet another electric vehicle according to an embodiment of the present disclosure;
FIG. 5 is a schematic structural diagram of yet another electric vehicle according to an embodiment of the present disclosure;
FIG. 6 is a schematic structural diagram of yet another electric vehicle according to an embodiment of the present disclosure;
FIG. 7 is a schematic structural diagram of yet another electric vehicle according to an embodiment of the present disclosure;
FIG. 8 is a schematic structural diagram of yet another electric vehicle according to an embodiment of the present disclosure;
FIG. 9 is a schematic structural diagram of yet another electric vehicle according to an embodiment of the present disclosure;
FIG. 10 is a schematic structural diagram of yet another electric vehicle according to an embodiment of the present disclosure;
FIG. 11 is a schematic structural diagram of yet another electric vehicle according to an embodiment of the present disclosure;
FIG. 12 is a schematic structural diagram of yet another electric vehicle according to an embodiment of the present disclosure;
FIG. 13 is a schematic structural diagram of yet another electric vehicle according to an embodiment of the present disclosure;
FIG. 14 is a schematic structural diagram of yet another electric vehicle according to an embodiment of the present disclosure;
FIG. 15 is a schematic structural diagram of yet another electric vehicle according to an embodiment of the present disclosure;
FIG. 16 is a schematic structural diagram of yet another electric vehicle according to an embodiment of the present disclosure;
FIG. 17 is a schematic structural diagram of yet another electric vehicle according to an embodiment of the present disclosure;
FIG. 18 is a flowchart of a control method according to an embodiment of the present disclosure;
FIG. 19 is a flowchart of another control method according to an embodiment of the present disclosure; and
FIG. 20 is a schematic structural diagram of a vehicle controller according to an embodiment of the present disclosure.

Electric vehicle 100, battery 10, control circuit 20, first switch control unit 21, second switch control unit 22, winding V1 of first motor, winding V2 of second motor, precharging unit 24, first switch K1 to fourth switch K4, precharging resistor R, boost unit 25, boost inductor 251, third switch control unit 252, first charging switch S1 to third charging switch S3, external charging device 200, first switch transistor Q1 to eighteenth switch transistor Q18, and first bus capacitor C1 to third bus capacitor C3.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are used for explaining rather than limiting the present disclosure.

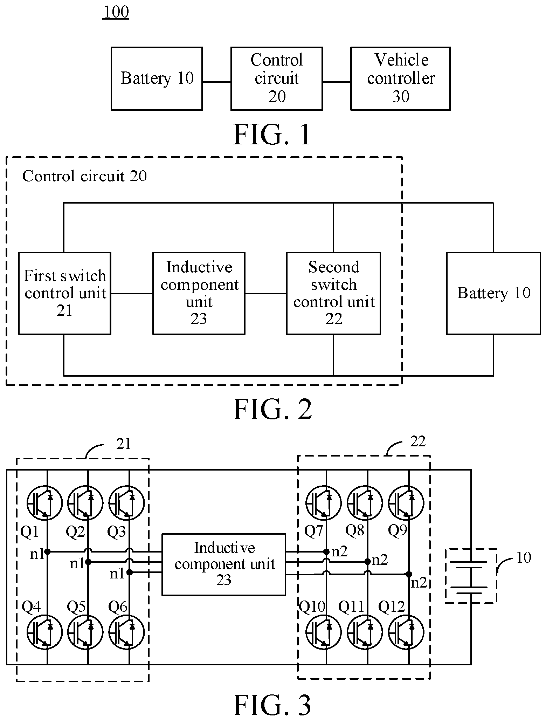

An embodiment of the present disclosure provides an electric vehicle. As shown in FIG. 1, the electric vehicle 100 may include a battery 10, a control circuit 20, and a vehicle controller 30. The control circuit 20 is connected to the battery 10 and the vehicle controller 30 separately. Optionally, the battery 10 may be a power battery. As shown in FIG. 2, the control circuit 20 may include:
a first switch control unit 21 and a second switch control unit 22; and
an inductive component unit 23 arranged between the first switch control unit 21 and the second switch control unit 22.

Switch transistors in the first switch control unit 21 and the second switch control unit 22 are alternately turned on and off in a predetermined sequence, to self-heat the battery 10 through charging and discharging of the inductive component unit 23.

As shown in FIG. 2, a first end of a first switch control unit 21 is connected to a positive electrode of the battery 10, a second end of the first switch control unit 21 is connected to a negative electrode of the battery 10, and a third end of the first switch control unit 21 is connected to one end of the inductive component unit 23.

A first end of the second switch control unit 22 is connected to the positive electrode of the battery 10, a second end of the second switch control unit 22 is connected to the negative electrode of the battery 10, and a third end of the second switch control unit 22 is connected to the other end of the inductive component unit 23.

At least one switch transistor (not shown in FIG. 2) may be arranged in each of the first switch control unit 21 and the second switch control unit 22.

The switch transistors in the first switch control unit 21 and the second switch control unit 22 are alternately turned on and off in a predetermined sequence, to control charging and discharging of the inductive component unit 23, thereby causing a current direction of the battery 10 to change alternately. Due to internal resistance in the battery 10, the alternate changing of the current direction of the battery 10 may cause a thermal effect on the internal resistance in the battery 10, thereby self-heating the battery 10.

In conclusion, the embodiments of the present disclosure provide a control circuit. The control circuit may include a first switch control unit, a second switch control unit, and an inductive component unit arranged between the first switch control unit and the second switch control unit. Switch transistors in the first switch control unit and the second switch control unit are alternately turned on and off in a predetermined sequence, to self-heat a battery through charging and discharging of the inductive component unit, thereby avoiding affecting charging and discharging power of the battery in a low-temperature environment.

In some embodiments of the present disclosure, the first switch control unit 21 and the second switch control unit 22 each may include an upper bridge switch transistor and a lower bridge switch transistor. A first node is provided between the upper bridge switch transistor and the lower bridge switch transistor in the first switch control unit 21, a second node is provided between the upper bridge switch transistor and the lower bridge switch transistor in the second switch control unit 22, and the inductive component unit 23 is connected between the first node and the second node.

Optionally, both the first switch control unit 21 and the second switch control unit 22 may be bridge circuits.

In some embodiments of the present disclosure, in a case that the upper bridge switch transistor in the first switch control unit 21 is turned on, the lower bridge switch transistor in the second switch control unit 22 is turned on, where the lower bridge switch transistor in the first switch control unit 21 and the upper bridge switch transistor in the second switch control unit 22 remain off. In a case that the lower bridge switch transistor in the first switch control unit 21 is turned on, the upper bridge switch transistor in the second switch control unit 22 is turned on, where the upper bridge switch transistor in the first switch control unit 21 and the lower bridge switch transistor in the second switch control unit 22 remain off. As the process repeats, the switch transistors in the first switch control unit 21 and the second switch control unit 22 are alternately turned on and off.

Each of the first switch control unit 21 and the second switch control unit 22 may include one or more upper bridge switch transistors and lower bridge switch transistors.

In a case that the first switch control unit 21 and the second switch control unit 22 each include one upper bridge switch transistor and one lower bridge switch transistor, when the upper bridge switch transistor in the first switch control unit 21 is turned on, and the lower bridge switch transistor in the second switch control unit 22 is turned on, the lower bridge switch transistor in the first switch control unit 21 and the upper bridge switch transistor in the second switch control unit 22 remain off.

When the lower bridge switch transistor in the first switch control unit 21 is turned on, and the upper bridge switch transistor in the second switch control unit 22 is turned on, the upper bridge switch transistor in the first switch control unit 21 and the lower bridge switch transistor in the second switch control unit 22 remain off.

In a case that the first switch control unit 21 and the second switch control unit 22 each include multiple upper bridge switch transistors and multiple lower bridge switch transistors, when at least one upper bridge switch transistor in the first switch control unit 21 is turned on, and at least one lower bridge switch transistor in the second switch control unit 22 is turned on, the multiple lower bridge switch transistors in the first switch control unit 21 and the multiple upper bridge switch transistors in the second switch control unit 22 all remain off.

When at least one lower bridge switch transistor in the first switch control unit 21 is turned on, and at least one upper bridge switch transistor in the second switch control unit 22 is turned on, the multiple upper bridge switch transistors in the first switch control unit 21 and the multiple lower bridge switch transistors in the second switch control unit 22 all remain off.

In a case that both the first switch control unit 21 and the second switch control unit 22 are three-phase bridge circuits, referring to FIG. 3, the first switch control unit 21 may include a first three-phase bridge arm, and a first switch transistor Q1 to a sixth switch transistor Q6. Each of the first switch transistor Q1 to the sixth switch transistor Q6 may be an insulated gate bipolar transistor (IGBT).

A first end of the first three-phase bridge arm (that is, the first end of the first switch control unit 21) is connected to the positive electrode of the battery 10. A second end of the first three-phase bridge arm (that is, the second end of the first switch control unit 21) is connected to the negative electrode of the battery 10. A third end of the first three-phase bridge arm (that is, the third end of the first switch control unit 21) is connected to one end of the inductive component unit 23 through a first node n1 on the first three-phase bridge arm.

The first three-phase bridge arm may include a first phase bridge arm, a second phase bridge arm, and a third phase bridge arm. An upper bridge switch transistor on the first phase bridge arm of the first three-phase bridge arm is the first switch transistor Q1, a lower bridge switch transistor is the fourth switch transistor Q4, and the first node n1 is provided between the first switch transistor Q1 and the fourth switch transistor Q4.

An upper bridge switch transistor on the second phase bridge arm of the first three-phase bridge arm is the second switch transistor Q2, a lower bridge switch transistor is the fifth switch transistor Q5, and the first node n1 is provided between the second switch transistor Q2 and the fifth switch transistor Q5.

An upper bridge switch transistor on the third phase bridge arm of the first three-phase bridge arm is the third switch transistor Q3, a lower bridge switch transistor is the sixth switch transistor Q6, and the first node n1 is provided between the third switch transistor Q3 and the sixth switch transistor Q6.

The second switch control unit 22 may include a second three-phase bridge arm, and a seventh switch transistor Q7 to a twelfth switch transistor Q12. Each of the seventh switch transistor Q7 to the twelfth switch transistor Q12 may be an IGBT.

A first end of the second three-phase bridge arm (that is, the first end of the second switch control unit 22) is connected to the positive electrode of the battery 10. A second end of the second three-phase bridge arm (that is, the second end of the second switch control unit 22) is connected to the negative electrode of the battery 10. A third end of the second three-phase bridge arm (that is, the third end of the second switch control unit 22) is connected to the other end of the inductive component unit 23 through a second node n2.

The second three-phase bridge arm may include a first phase bridge arm, a second phase bridge arm, and a third phase bridge arm. An upper bridge switch transistor on the first phase bridge arm of the second three-phase bridge arm is the seventh switch transistor Q7, a lower bridge switch transistor is the tenth switch transistor Q10, and the second node n2 is provided between the seventh switch transistor Q7 and the tenth switch transistor Q10.

An upper bridge switch transistor on the second phase bridge arm of the second three-phase bridge arm is the eighth switch transistor Q8, a lower bridge switch transistor is the eleventh switch transistor Q11, and the second node n2 is provided between the eighth switch transistor Q8 and the eleventh switch transistor Q11.

An upper bridge switch transistor on the third phase bridge arm of the second three-phase bridge arm is the ninth switch transistor Q9, a lower bridge switch transistor is the twelfth switch transistor Q12, and the second node n2 is provided between the ninth switch transistor Q9 and the twelfth switch transistor Q12.

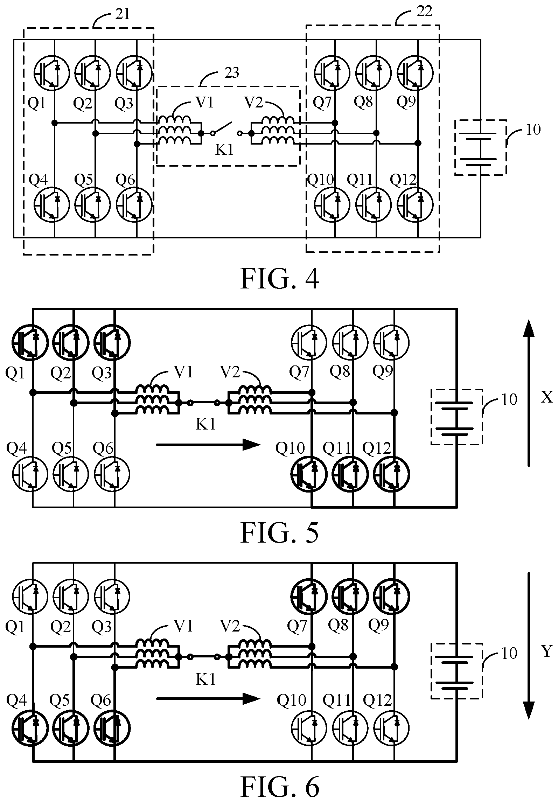

In some embodiments of the present disclosure, referring to FIG. 4, the inductive component unit 23 includes a winding V1 of a first motor, a first switch K1, and a winding V2 of a second motor. The first switch K1 is connected between a winding neutral point of the first motor and a winding neutral point of the second motor.

In a case that the first switch K1 is closed, the winding V1 of the first motor and the winding V2 of the second motor are charged and discharged based on the alternate turning on and off of the switch transistors in the first switch control unit 21 and the second switch control unit 22.

Optionally, the first switch control unit 21 may be a drive control circuit of the first motor, and the second switch control unit 22 may be a drive control circuit of the second motor.

Both the drive control circuit of the first motor and the drive control circuit of the second motor may be three-phase bridge circuits. When at least one upper bridge switch transistor in the drive control circuit of the first motor is turned on, at least one lower bridge switch transistor in the drive control circuit of the second motor is turned on. When at least one lower bridge switch transistor in the drive control circuit of the first motor is turned on, at least one upper bridge switch transistor in the drive control circuit of the second motor is turned on.

Optionally, in a case that at least one upper bridge switch transistor in the drive control circuit of the first motor is turned on, and at least one lower bridge switch transistor in the drive control circuit of the second motor is turned on, the multiple lower bridge switch transistors in the drive control circuit of the first motor and the multiple upper bridge switch transistors in the drive control circuit of the second motor are all turned off.

In a case that at least one lower bridge switch transistor in the drive control circuit of the first motor is turned on, and at least one upper bridge switch transistor in the drive control circuit of the second motor is turned on, the multiple upper bridge switch transistors in the drive control circuit of the first motor and the multiple lower bridge switch transistors in the drive control circuit of the second motor are all turned off.

In some embodiments of the present disclosure, in a case that both the drive control circuit of the first motor and the drive control circuit of the second motor are three-phase bridge circuits, referring to FIG. 4, in a first time period, the upper bridge switch transistors (that is, the first switch transistor Q1 to the third switch transistor Q3) of the drive control circuit of the first motor and the lower bridge switch transistors (that is, the tenth switch transistor Q10 to the twelfth switch transistor Q12) of the drive control circuit of the second motor are all turned on, and the lower bridge switch transistors (that is, the fourth switch transistor Q4 to the sixth switch transistor Q6) of the drive control circuit of the first motor and the upper bridge switch transistors (that is, the seventh switch transistor Q7 to the ninth switch transistor Q9) of the drive control circuit of the second motor all remain off.

In a second time period, the lower bridge switch transistors (that is, the fourth switch transistor Q4 to the sixth switch transistor Q6) of the drive control circuit of the first motor and the upper bridge switch transistors (that is, the seventh switch transistor Q7 to the ninth switch transistor Q9) of the drive control circuit of the second motor are all turned on, and the upper bridge switch transistors (that is, the first switch transistor Q1 to the third switch transistor Q3) of the drive control circuit of the first motor and the lower bridge switch transistors (that is, the tenth switch transistor Q10 to the twelfth switch transistor Q12) of the drive control circuit of the second motor all remain off.

The first time period and the second time period are alternate. The predetermined sequence may include at least one alternate first time period and second time period.

In the first time period, referring to FIG. 5, starting from the positive electrode of the battery 10, a current flows through the first switch transistor Q1 to the third switch transistor Q3, the winding V1 of the first motor, the first switch K1, the winding V2 of the second motor, and the tenth switch transistor Q10 to the twelfth switch transistor Q12, and finally returns to the negative electrode of the battery 10. In this process, energy of the battery 10 is transferred to the winding V1 of the first motor and the winding V2 of the second motor. Since both the winding V1 of the first motor and the winding V2 of the second motor can store the received energy, the winding V1 of the first motor and the winding V2 of the second motor are charged. The current flows from the positive electrode of the battery 10 to the negative electrode of the battery 10. The current direction may be an X direction in the figure.

In the second time period, referring to FIG. 6, since a current of the winding V1 of the first motor and a current of the winding V2 of the second motor cannot change abruptly, the winding V1 of the first motor and the winding V2 of the second motor start to discharge. The current of the winding V1 of the first motor and the current of the winding V2 of the second motor freewheel through the fourth switch transistor Q4 to the sixth switch transistor Q6 and the seventh switch transistor Q7 to the ninth switch transistor Q9. Starting from the positive electrode of the battery 10, a current sequentially flows through the fourth switch transistor Q4 to the sixth switch transistor Q6, the winding V1 of the first motor, the first switch K1, the winding V2 of the second motor, and the seventh switch transistor Q7 to the ninth switch transistor Q9, and finally returns to the positive electrode of the battery 10. Therefore, energy accumulated by the winding V1 of the first motor and the winding V2 of the second motor in the first time period is re-released to the battery 10. The current flows from the negative electrode of the battery 10 to the positive electrode of the battery 10. The current direction may be a Y direction in the figure.

Through the alternating of the first time period and the second time period, the inductive component unit 23 is charged and discharged alternately, so that the current direction of the battery 10 changes alternately. Due to internal resistance in the battery 10, the alternate changing of the current direction of the battery 10 may cause a thermal effect on the internal resistance in the battery 10, thereby self-heat the battery 10.

In a case that the first switch control unit 21 is the drive control circuit of the first motor, and the second switch control unit 22 is the drive control circuit of the second motor, the present disclosure makes full use of topological advantages of the multi-motor circuit by connecting the winding neutral point of the first motor and the winding neutral point of the second motor through the first switch K1, to self-heat the battery 10.

Compared with a single-motor circuit in the related art, where a neutral line of a battery is connected to a winding neutral point of a motor through a switch to self-heat the battery, in this solution, the first switch K1 is connected between the winding neutral point of the first motor and the winding neutral point of the second motor, to self-heat the battery 10. Because a wire harness connected between the winding V1 of the first motor and the winding V2 of the second motor is shorter than a wire harness connected between the neutral line of the battery and the winding neutral point of the motor, a wire harness length used for connection is greatly reduced without adding an additional switch, thereby reducing costs of self-heating the battery 10. Moreover, this solution can make less changes to the original multi-motor circuit, and have lower hardware costs and lower practical implementation costs, so that advantages of a multi-motor vehicle can be fully exploited.

In addition, compared with the single-motor circuit in the related art, where four time periods are required for self-heating the battery once, referring to FIG. 4, the control logic for self-heating the battery 10 is more simple in this solution, where only two time periods (that is, the first time period and the second time period) are required for on/off control on the first switch transistor Q1 to the twelfth switch transistor Q12, to self-heat the battery 10.

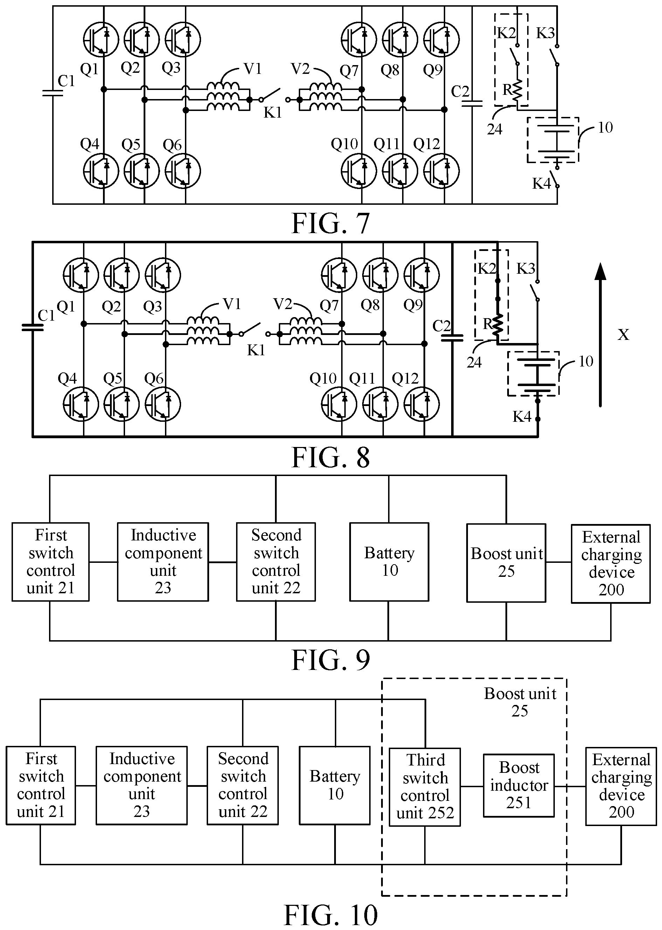

In some embodiments of the present disclosure, referring to FIG. 7, the control circuit 20 may further include a precharging unit 24. The precharging unit 24 is connected to a direct current bus after being connected in series to the battery 10, to precharge a bus capacitor connected to the direct current bus based on power supply from the battery 10.

The precharging unit 24 may include a precharging resistor R and a second switch K2 connected in series. The second switch K2 may be a contactor.

The control circuit 20 may further include a bus capacitor. One end of the bus capacitor is connected to a positive direct current bus, and the other end of the bus capacitor is connected to a negative direct current bus. During the precharging of the bus capacitor, the second switch K2 is in closed. Starting from the positive electrode of the battery 10, a current provided by the battery 10 sequentially flows through the precharging unit 24 and the bus capacitor, and finally returns to the negative electrode of the battery 10, to precharge the bus capacitor connected to the direct current bus based on the power supply from the battery 10. By arranging the precharging resistor R in the precharging unit 24, the overcurrent due to an excessive current in a precharging loop at the instant when the precharging unit 24 is turned on can be effectively avoided.

Optionally, one or more bus capacitors may be provided. An example in which multiple bus capacitors are provided is used. Referring to FIG. 7, the bus capacitors may include a first bus capacitor C1 and a second bus capacitor C2. Both the first bus capacitor C1 and the second bus capacitor C2 are connected in parallel to the battery 10.

Referring to FIG. 8, in a case that the second switch K2 is closed, starting from the positive electrode of the battery 10, a current sequentially flows through the precharging unit 24 and the first bus capacitor C1, and finally returns to the negative electrode of the battery 10. At the same time, the current sequentially flows through the precharging unit 24 and the second bus capacitor C2, and finally returns to the negative electrode of the battery 10. In this way, the first bus capacitor C1 and the second bus capacitor C2 connected to the direct current bus are precharged based on the power supply from the battery 10. The current direction may be the X direction in the figure.

It should be noted that, the bus capacitor is precharged before the battery 10 is heated. During the precharging of the bus capacitor, the switch transistors in the drive control circuit of the first motor and the switch transistors in the drive control circuit of the second motor are all turned off. During the self-heating of the battery 10, the precharging unit 24 may be turned on or off.

In some embodiments of the present disclosure, referring to FIG. 7, the positive electrode of the battery 10 is connected to the positive direct current bus through a third switch K3, the negative electrode of the battery 10 is connected to the negative direct current bus through a fourth switch K4, and the precharging unit 24 is connected in parallel to the third switch K3. Both the third switch K3 and the fourth switch K4 may be contactors.

During the precharging of the bus capacitor, both the second switch K2 and the fourth switch K4 are closed, and the third switch K3 is open, thereby precharging the bus capacitor connected to the direct current bus based on the power supply from the battery 10. After the precharging of the bus capacitor ends, the third switch K3 is closed, and the battery 10 is directly connected to the bus capacitor.

In some embodiments of the present disclosure, referring to FIG. 9, the control circuit 20 may further include: a boost unit 25, configured to boost a voltage output by an external charging device 200, to charge the battery 10.

A first end of the boost unit 25 is connected to a positive terminal of the external charging device 200, a second end of the boost unit 25 is connected to the negative electrode of the battery 10 and a negative terminal of the external charging device 200 separately, and a third end of the boost unit 25 is connected to the positive electrode of the battery 10.

It may be understood that when the voltage output by the external charging device 200 is lower than a voltage required by the battery 10, the voltage output by the external charging device 200 is boosted by the boost unit 25, so that the voltage output by the external charging device 200 matches the voltage required by the battery 10, to charge the battery 10 by the external charging device 200.

Referring to FIG. 10, the boost unit 25 may include:
a boost inductor 251, where one end of the boost inductor 251 (that is, the first end of the boost unit 25) is connected to the positive terminal of the external charging device 200; and
a third switch control unit 252, where a third node (not shown in FIG. 10) is provided between an upper bridge switch transistor and a lower bridge switch transistor in the third switch control unit 252, and the third node is connected to the other end of the boost inductor 251.

The upper bridge switch transistor and the lower bridge switch transistor in the third switch control unit 252 are alternately turned on and off, to boost the voltage output by the external charging device 200.

Referring to FIG. 10, a negative terminal of the third switch control unit 252 (that is, the second end of the boost unit 25) is connected to the negative electrode of the battery 10 and the negative electrode of the external charging device 200 separately, and a positive terminal of the third switch control unit 252 (that is, the third end of the boost unit 25) is connected to the positive electrode of the battery 10.

Optionally, the third switch control unit 252 may be a bridge circuit. The third switch control unit 252 may include at least one upper bridge switch transistor and at least one lower bridge switch transistor.

In some embodiments of the present disclosure, the upper bridge switch transistor in the third switch control unit is turned on, so that the external charging device 200 directly charges the battery 10.

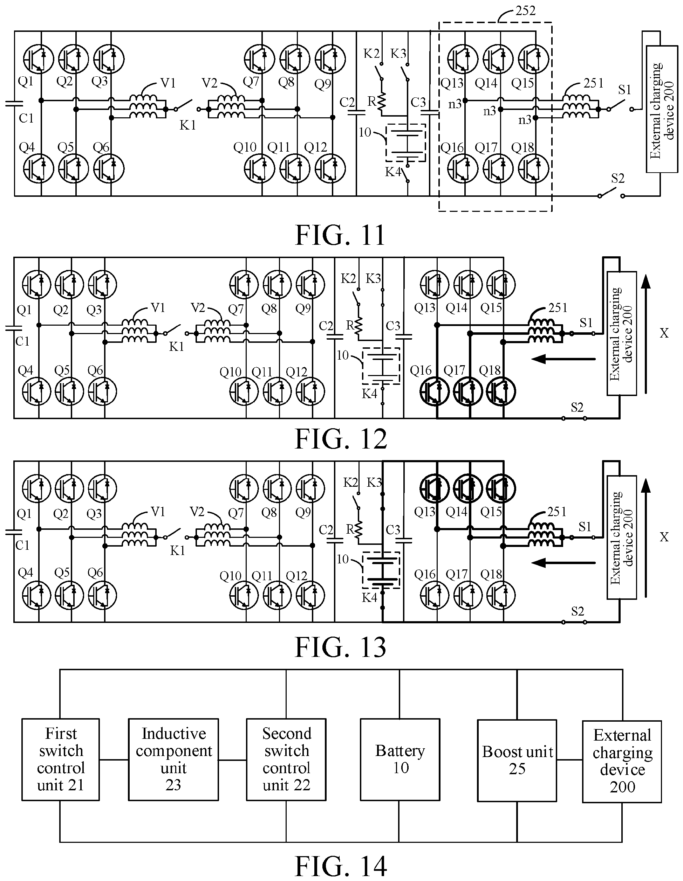

In some embodiments of the present disclosure, referring to FIG. 11, the boost inductor 251 may be a winding of a third motor, and the third switch control unit 252 is a drive control circuit of the third motor. The control circuit 20 may further include a first charging switch S1 and a second charging switch S2. Both the first charging switch S1 and the second charging switch S2 may be contactors. A winding neutral point of the third motor is connected to the positive terminal of the external charging device 200 through the first charging switch S1, and a negative terminal of the drive control circuit of the third motor is connected to the negative terminal of the external charging device 200 through the second charging switch S2.

In a case that the first charging switch S1 and the second charging switch S2 are closed, an upper bridge switch transistor and a lower bridge switch transistor on a same bridge arm in the drive control circuit of the third motor are alternately turned on and off, for the external charging device 200 to boost charge the battery 10.

The upper bridge switch transistor and the lower bridge switch transistor on the same bridge arm being alternately turned on and off means that states of the upper bridge switch transistor and the lower bridge switch transistor on the same bridge arm are alternately different. That is, in a case that the upper bridge switch transistor is closed, the lower bridge switch transistor is opened, and in a case that the upper bridge switch transistor is open, the lower bridge switch transistor is closed.

In some embodiments of the present disclosure, in a case that the first charging switch S1 and the second charging switch S2 are closed, at least one upper bridge switch transistor in the drive control circuit of the third motor is turned on, so that the external charging device 200 directly charges the battery 10.

In some embodiments of the present disclosure, the drive control circuit of the third motor may be a three-phase bridge circuit. Referring to FIG. 11, when the external charging device 200 boost charges the battery 10, an upper bridge switch transistor and a lower bridge switch transistor on at least one phase bridge arm in the drive control circuit of the third motor are alternately turned on and off.

During the upper bridge switch transistor and the lower bridge switch transistor on the at least one phase bridge arm being alternately turned on and off, when the upper bridge switch transistor on the at least one phase bridge arm is turned on, the lower bridge switch transistor on the bridge arm on which the turned-on upper bridge switch transistor is located is turned off. When the lower bridge switch transistor on at least one phase bridge arm is turned on, the upper bridge switch transistor on the bridge arm on which the turned-on lower bridge switch transistor is located is turned off.

Referring to FIG. 11, in a case that the external charging device 200 directly charges the battery 10, the upper bridge switch transistors of the third switch control unit are all turned on, and the lower bridge switch transistors are all turned off.

In a case that the external charging device 200 boost charges the battery 10, both the first charging switch S1 and the second charging switch S2 are closed, and when the upper bridge switch transistor on the at least one phase bridge arm in the drive control circuit of the third motor is turned on, the lower bridge switch transistor on the bridge arm on which the turned-on upper bridge switch transistor is located is turned off; and when the lower bridge switch transistor on the at least one phase bridge arm in the drive control circuit of the third motor is turned on, the upper bridge switch transistors on the bridge arm on which the lower bridge switch transistor is located are all turned off.

When the upper bridge switch transistor on the at least one phase bridge arm in the drive control circuit of the third motor is turned on, and the lower bridge switch transistors on the bridge arm on which the turned-on upper bridge switch transistor is located are all turned off, starting from the positive terminal of the external charging device 200, a current may sequentially flow through the winding of the third motor, the upper bridge switch transistor on the at least one phase bridge arm in the drive control circuit of the third motor, and the battery 10, and finally return to the negative terminal of the external charging device 200. When the lower bridge switch transistor on the at least one phase bridge arm in the drive control circuit of the third motor is turned on, and the upper bridge switch transistors on the bridge arm on which the turned-on lower bridge switch transistor is located are all turned off, starting from the positive terminal of the external charging device 200, a current may sequentially flow through the winding of the third motor, the lower bridge switch transistor on the at least one phase bridge arm in the drive control circuit of the third motor, and the battery 10, and finally return to the negative terminal of the external charging device 200. This alternates to enable the external charging device 200 to boost charge the battery 10.

The first charging switch S1 and the second charging switch S2 are closed, the upper bridge switch transistors in the drive control circuit of the third motor are all turned on, and the lower bridge switch transistors are all turned off. In this case, starting from the positive terminal of the external charging device 200, a current may sequentially flow through the winding of the third motor, the turned-on upper bridge switch transistor in the drive control circuit of the third motor, and the battery 10, and finally return to the negative terminal of the external charging device 200, to directly charge the battery 10 by the external charging device 200.

Referring to FIG. 11, the drive control circuit of the third motor may include a third three-phase bridge arm, and a thirteenth switch transistor Q13 to an eighteenth switch transistor Q18. Each of the thirteenth switch transistor Q13 to the eighteenth switch transistor Q18 may be an IGBT.

A positive terminal of the third three-phase bridge arm is connected to the positive direct current bus, a negative terminal of the third three-phase bridge arm is connected to the negative direct current bus, and a third node n3 on the third three-phase bridge arm is connected to one end of the winding of the third motor.

The third three-phase bridge arm may include a first phase bridge arm, a second phase bridge arm, and a third phase bridge arm. An upper bridge switch transistor on the first phase bridge arm of the third three-phase bridge arm is the thirteenth switch transistor Q13, a lower bridge switch transistor is the sixteenth switch transistor Q16, and the third node n3 is provided between the thirteenth switch transistor Q13 and the sixteenth switch transistor Q16. An upper bridge switch transistor on the second phase bridge arm of the third three-phase bridge arm is the fourteenth switch transistor Q14, a lower bridge switch transistor is the seventeenth switch transistor Q17, and the third node n3 is provided between the fourteenth switch transistor Q14 and the seventeenth switch transistor Q17. An upper bridge switch transistor on the third phase bridge arm of the third three-phase bridge arm is the fifteenth switch transistor Q15, a lower bridge switch transistor is the eighteenth switch transistor Q18, and the third node n3 is provided between the fifteenth switch transistor Q15 and the eighteenth switch transistor Q18.

In a case that the external charging device 200 boost charges the battery 10, if at least one phase bridge arm includes the first phase bridge arm in the drive control circuit of the third motor, when the first charging switch S1 and the second charging switch S2 are closed, the thirteenth switch transistor Q13 and the sixteenth switch transistor Q16 are alternately turned on and off.

Optionally, in a case that the sixteenth switch transistor Q16 is turned on, and the thirteenth switch transistor Q13 is turned off, starting from the positive terminal of the external charging device 200, a current sequentially flows through the winding of the third motor and the sixteenth switch transistor Q16, and finally returns to the negative terminal of the external charging device 200, to transfer energy of the external charging device 200 to the winding of the third motor, to charge the winding of the third motor.

When the thirteenth switch transistor Q13 is turned on, and the sixteenth switch transistor Q16 is turned off, a current freewheels through the thirteenth switch transistor Q13. Starting from the positive terminal of the external charging device 200, the current may sequentially flow through the winding of the third motor, the thirteenth switch transistor Q13 and the battery 10, and finally return to the negative terminal of the external charging device 200, to boost charge the battery 10 by the external charging device 200.

Referring to FIG. 12, if the at least one phase bridge arm includes the first phase bridge arm, the second phase bridge arm, and the third phase bridge arm in the drive control circuit of the third motor, in a case that the first charging switch S1 and the second charging switch S2 are closed, the thirteenth switch transistor Q13 to the fifteenth switch transistor Q15 and the sixteenth switch transistor Q16 to the eighteenth switch transistor Q18 are alternately turned on and off.

Referring to FIG. 12, when the sixteenth switch transistor Q16 to the eighteenth switch transistor Q18 are turned on, the thirteenth switch transistor Q13 to the fifteenth switch transistor Q15 are all turned off. In this case, starting from the positive terminal of the external charging device 200, a current sequentially flows through the first charging switch S1, the winding (that is, the boost inductor 251) of the third motor, and the sixteenth switch transistor Q16 to the eighteenth switch transistor Q18, and finally returns to the negative terminal of the external charging device 200, to transfer energy of the external charging device 200 to the winding of the third motor, to charge the winding of the third motor.

Then, referring to FIG. 13, when the thirteenth switch transistor Q13 to the fifteenth switch transistor Q15 are turned on, and the sixteenth switch transistor Q16 to the eighteenth switch transistor Q18 are all turned off, a current freewheels through the thirteenth switch transistor Q13 to the fifteenth switch transistor Q15. Starting from the positive terminal of the external charging device 200, the current sequentially flows through the first charging switch S1, the winding (that is, the boost inductor 251) of the third motor, the thirteenth switch transistor Q13 to the fifteenth switch transistor Q15, the third switch K3, the battery 10, and the fourth switch K4, and finally returns to the negative terminal of the external charging device 200, to boost charge the battery 10 by the external charging device 200. As the process repeats, the external charging device 200 can boost charge the battery 10.

In the embodiments of the present disclosure, during the external charging device 200 boost charging the battery 10, the control circuit 20 may operate in a force continuous conduction mode (FCCM). A magnitude of an output voltage of the direct current output by the external charging device 200 through the entire control circuit 20 may be adjusted through a conduction duty cycle of a lower bridge switch transistor of the drive control circuit of the third motor, thereby meeting boost requirements for charging processes of different batteries 10.

In a case that the boost inductor 251 is the winding of the third motor, and the third switch control unit 252 is the drive control circuit of the third motor, the present disclosure makes full use of topological advantages of the multi-motor circuit, and utilizes an implementation idea of the original multi-motor circuit, to achieve boost charging without adding additional components and with less changes to the original multi-motor circuit.

In addition, in this solution, the drive control circuits of the motors for the self-heating the battery 10 (that is, the drive control circuit of the first motor and the drive control circuit of the second motor) are separated from the drive control circuit of the motor for boost charging the battery 10 (that is, the drive control circuit of the third motor). Through the drive control circuits of the different motors, the battery 10 is self-heated and the battery 10 is boost charged separately, which decouples a self-heating function and a boost charging function. While the complexity of the function of the drive control circuit of a single motor is reduced, fault tolerance of the control circuit 20 in a malfunction occurs is improved, and the existing motor electric control is fully utilized. Utilizations of components are balanced, ensuring reliability of the components for a greater length of time.

In a case that the external charging device 200 directly charges the battery 10, referring to FIG. 13, in a case that the first charging switch S1 and the second charging switch S2 are closed, the upper bridge switch transistors (that is, the thirteenth switch transistor Q13 to the fifteenth switch transistor Q15) in the drive control circuit of the third motor are all turned on, and the lower bridge switch transistors (that is, the sixteenth switch transistor Q16 to the eighteenth switch transistor Q18) are all turned off. In this case, starting from the positive terminal of the external charging device 200, a current sequentially flows through the winding of the third motor, the first charging switch S1, the thirteenth switch transistor Q13 to the fifteenth switch transistor Q15, the third switch K3, the battery 10, the fourth switch K4, and the second charging switch S2, and finally returns to the negative terminal of the external charging device 200, to directly charge the battery 10 by the external charging device 200.

It should be noted that, in a case that the external charging device 200 directly charges the battery 10, the third switch K3 and the fourth switch K4 remain closed.

In some embodiments of the present disclosure, referring to FIG. 14, the third end of the boost unit 25 is further connected to the positive terminal of the external charging device 200.

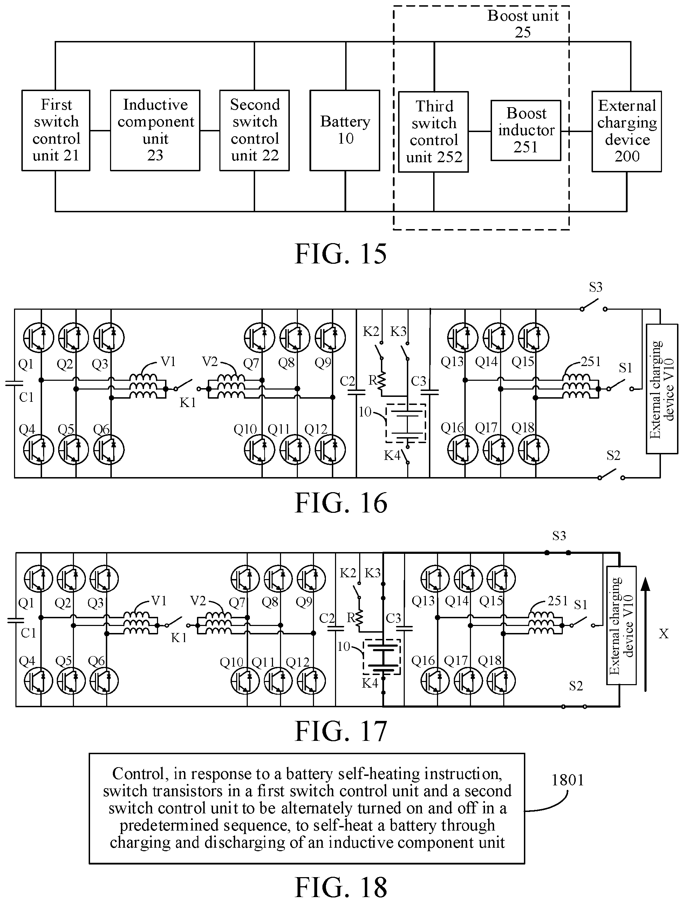

Optionally, referring to FIG. 15, the positive terminal of the third switch control unit 252 is further connected to the positive terminal of the external charging device 200.

The boost inductor 251 may be the winding of the third motor, and the third switch control unit 252 is the drive control circuit of the third motor. Referring to FIG. 16, the control circuit 20 may further include a third charging switch S3. One end of the third charging switch S3 is connected to the positive direct current bus, and the other end of the third charging switch S3 is configured to be connected to the positive terminal of the external charging device 200.

The external charging device 200 directly charges the battery 10 in a case that the second charging switch S2 and the third charging switch S3 are closed. The third charging switch S3 may be a contactor.

Referring to FIG. 17, in a case that the second charging switch S2 and the third charging switch S3 are closed, starting from the positive terminal of the external charging device 200, a current flows through the third charging switch S3, the first switch K3, the battery 10, the fourth switch S4, and the second charging switch S2, and finally returns to the negative terminal of the external charging device 200, to directly charge the battery 10 by the external charging device 200.

The external charging device 200 is directly connected to the battery 10 through the third charging switch S3. During the external charging device 200 directly charging the battery 10, electric energy provided by the external charging device 200 is directly transferred to the battery 10 through the direct current bus without passing through the winding of the third motor and the drive control circuit of the third motor. This avoids loss of electric energy in the winding of the third motor and the drive control circuit of the third motor, and improves efficiency of charging the battery.

In some embodiments of the present disclosure, referring to FIG. 16, the bus capacitor may further include a third bus capacitor C3. The third bus capacitor C3 is connected in parallel to the battery 10. During precharging of the bus capacitor, the third bus capacitor C3 may also be precharged. Starting from the positive electrode of the battery 10, a current may sequentially flow through the precharging unit 24 and the third bus capacitor C3, and finally return to the negative electrode of the battery 10, to precharge the third bus capacitor C3 connected to the direct current bus based on the power supply from the battery 10.

In a case that the boost inductor is the winding of the third motor, and the third switch control unit is the drive control circuit of the third motor, the present disclosure makes full use of topological advantages of the multi-motor circuit by connecting the winding neutral point of the third motor and the external charging device through the first charging switch, to directly charge or boost charge the battery. Because a distance between the winding of the third motor and the external charging device is short, a wire harness connected between the winding of the third motor and the external charging device is short. Therefore, in this solution, only a short wire harness may be added to the original multi-motor circuit, with less changes to the original multi-motor circuit and lower hardware costs.

In addition, in a case that the first switch control unit is the drive control circuit of the first motor, and the second switch control unit is the drive control circuit of the second motor, a process of self-heating the battery and a process of directly charging or boost charging the battery can be separated, thereby better adapting to a multi-motor situation.

In conclusion, the embodiments of the present disclosure provide a control circuit. The control circuit may include a first switch control unit, a second switch control unit, and an inductive component unit arranged between the first switch control unit and the second switch control unit. Switch transistors in the first switch control unit and the second switch control unit are alternately turned on and off in a predetermined sequence, to self-heat a battery through charging and discharging of the inductive component unit, thereby avoiding affecting charging and discharging power of the battery in a low-temperature environment.

FIG. 18 is a flowchart of a control method according to an embodiment of the present disclosure. The method may be applied to the electric vehicle in FIG. 1 to FIG. 17. Referring to FIG. 18, the method includes:
Step 1801: In response to a battery self-heating instruction, switch transistors in a first switch control unit and a second switch control unit are controlled to be alternately turned on and off in a predetermined sequence, to self-heat a battery through charging and discharging of an inductive component unit.

A vehicle controller may control, in response to the battery self-heating instruction, the switch transistors in the first switch control unit and the second switch control unit to be alternately turned on and off in a predetermined sequence, to self-heat the battery through charging and discharging of the inductive component unit 23. The inductive component unit is arranged between the first switch control unit and the second switch control unit.

In conclusion, the embodiments of the present disclosure provide a control method. In the method, a vehicle controller may control, in response to a battery self-heating instruction, switch transistors in a first switch control unit and a second switch control unit to be alternately turned on and off in a predetermined sequence, to self-heat a battery through charging and discharging of an inductive component unit, thereby avoiding affecting charging and discharging power of the battery in a low-temperature environment.

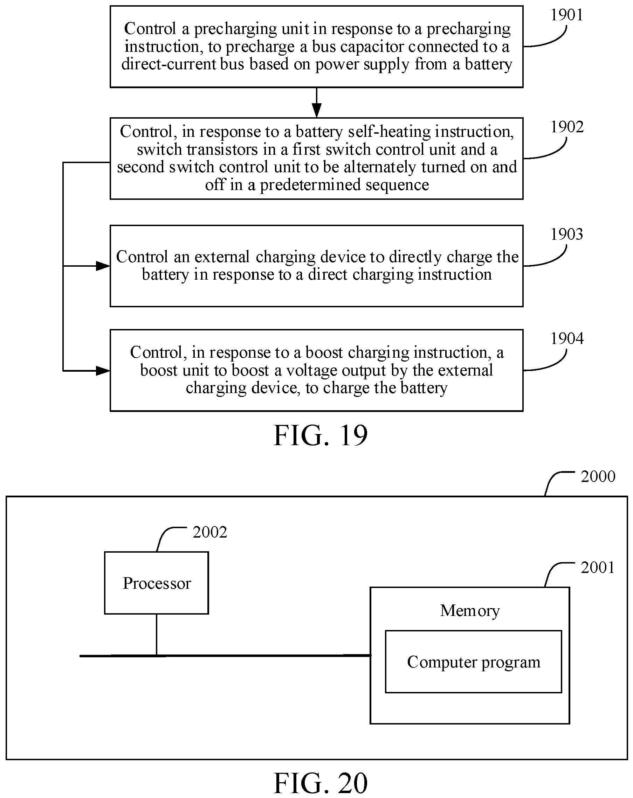

FIG. 19 is a flowchart of another control method according to an embodiment of the present disclosure. The method may be applied to the electric vehicle in FIG. 1 to FIG. 17. Referring to FIG. 19, the method may include the following steps.

Step 1901: A precharging unit is controlled in response to a precharging instruction, to precharge a bus capacitor connected to a direct current bus based on power supply from a battery.

A vehicle controller may control the precharging unit in response to the precharging instruction, to precharge the bus capacitor connected to the direct current bus based on the power supply from the battery.

Optionally, referring to FIG. 8, the vehicle controller may control, in response to the precharging instruction, the fourth switch K4 to be closed, and control the second switch K2 in the precharging unit 24 to be closed, so that the precharging unit 24 precharges the bus capacitors (that is, the first bus capacitor C1 and the second bus capacitor C2) connected to the direct current bus based on the power supply from the battery 10.

Optionally, the vehicle controller controls the second switch K2 and the fourth switch K4 to be closed, so that the precharging unit 24 precharges the bus capacitor connected to the direct current bus based on the power supply from the battery 10.

After precharging for the capacitor ends, the vehicle controller may control the third switch K3 to be closed, the battery 10 of the precharging unit 24 is directly connected to the bus capacitor, and the precharging for the capacitor ends.

After the vehicle controller controls the precharging for the capacitor to end, the third switch K3 and the fourth switch K4 remain closed.

Step 1902: In response to a battery self-heating instruction, switch transistors in a first switch control unit and a second switch control unit are controlled to be alternately turned on and off in a predetermined sequence.

The vehicle controller controls the precharging unit in response to the precharging instruction, to control, in response to the battery self-heating instruction, the switch transistors in the first switch control unit and the second switch control unit to be alternately turned on and off in a predetermined sequence after precharging the bus capacitor connected to the direct current bus based on the power supply from the battery, to self-heat the battery through charging and discharging of the inductive component unit.

The vehicle controller may control a lower bridge switch transistor in the second switch control unit to be turned on when controlling an upper bridge switch transistor in the first switch control unit to be turned on. The lower bridge switch transistor in the first switch control unit and the upper bridge switch transistor in the second switch control unit remain off.

The vehicle controller may control an upper bridge switch transistor in the second switch control unit to be turned on when controlling a lower bridge switch transistor in the first switch control unit to be turned on. The upper bridge switch transistor in the first switch control unit and the lower bridge switch transistor in the second switch control unit remain off.

In a case that the first switch control unit and the second switch control unit each include one upper bridge switch transistor and one lower bridge switch transistor, when the vehicle controller may control the upper bridge switch transistor in the first switch control unit to be turned on, and the lower bridge switch transistor in the second switch control unit to be turned on, the vehicle controller controls the lower bridge switch transistor in the first switch control unit and the upper bridge switch transistor in the second switch control unit to remain off.

Then, the vehicle controller may control the lower bridge switch transistor in the first switch control unit to be turned on, and the upper bridge switch transistor in the second switch control unit to be turned on, and control the upper bridge switch transistor in the first switch control unit and the lower bridge switch transistor in the second switch control unit to remain off.

In a case that the first switch control unit and the second switch control unit each include multiple upper bridge switch transistors and multiple lower bridge switch transistors, the vehicle controller may control at least one upper bridge switch transistor in the first switch control unit to be turned on and at least one lower bridge switch transistor in the second switch control unit to be turned on, and control the multiple lower bridge switch transistors in the first switch control unit and the multiple upper bridge switch transistors in the second switch control unit to all remain off.

Then, the vehicle controller controls at least one lower bridge switch transistor in the first switch control unit to be turned on, and at least one upper bridge switch transistor in the second switch control unit to be turned on, and controls the multiple upper bridge switch transistors in the first switch control unit and the multiple lower bridge switch transistors in the second switch control unit to all remain off.

Optionally, the vehicle controller may further control the first switch to be closed.

The vehicle controller may control the first switch to be closed, and control at least one lower bridge switch transistor in a drive control circuit of a second motor to be turned on when controlling at least one upper bridge switch transistor in a drive control circuit of a first motor to be turned on.

The first switch control unit is the drive control circuit of the first motor, and the second switch control unit is the drive control circuit of the second motor.

The vehicle controller controls at least one upper bridge switch transistor in the drive control circuit of the second motor to be turned on when controlling at least one lower bridge switch transistor in the drive control circuit of the first motor to be turned on.

Optionally, the vehicle controller may control, in a first time period, at least one upper bridge switch transistor in the drive control circuit of the first motor to be turned on and at least one lower bridge switch transistor in the drive control circuit of the second motor to be turned on. In a second time period, when at least one lower bridge switch transistor in the drive control circuit of the first motor is controlled to be turned on, at least one upper bridge switch transistor in the drive control circuit of the second motor is turned on. In this way, the switch transistors in the drive control circuit of the first motor and the drive control circuit of the second motor can be alternately turned on and off in a predetermined sequence, to self-heat the battery.

The first time period and the second time period are alternate, and the predetermined sequence may include at least one alternate first time period and second time period.

Optionally, the vehicle controller may control, in a first time period, the upper bridge switch transistors of the drive control circuit of the first motor and the lower bridge switch transistors of the drive control circuit of the second motor to be all turned on, and control the lower bridge switch transistors of the drive control circuit of the first motor and the upper bridge switch transistors of the drive control circuit of the second motor to all remain off. In a second time period, the vehicle controller may control the lower bridge switch transistors of the drive control circuit of the first motor and the upper bridge switch transistors of the drive control circuit of the second motor to be all turned on, and control the upper bridge switch transistors of the drive control circuit of the first motor and the lower bridge switch transistors of the drive control circuit of the second motor to all remain off.

Optionally, referring to FIG. 5, the vehicle controller may control, in response to the battery self-heating instruction, the first switch K1 to be closed, and in a first time period, control the upper bridge switch transistors (that is, the first switch transistor Q1 to the third switch transistor Q3) of the drive control circuit of the first motor and the lower bridge switch transistors (that is, the tenth switch transistor Q10 to the twelfth switch transistor Q12) of the drive control circuit of the second motor to be all turned on, and control the lower bridge switch transistors (that is, the fourth switch transistor Q4 to the sixth switch transistor Q6) of the drive control circuit of the first motor and the upper bridge switch transistors (that is, the seventh switch transistor Q7 to the ninth switch transistor Q9) of the drive control circuit of the second motor to all remain off.

Referring to FIG. 6, in a second time period, the vehicle controller may control the lower bridge switch transistors (that is, the fourth switch transistor Q4 to the sixth switch transistor Q6) of the drive control circuit of the first motor and the upper bridge switch transistors (that is, the seventh switch transistor Q7 to the ninth switch transistor Q9) of the drive control circuit of the second motor to be all turned on, and control the upper bridge switch transistors (that is, the first switch transistor Q1 to the third switch transistor Q3) of the drive control circuit of the first motor and the lower bridge switch transistors (that is, the tenth switch transistor Q10 to the twelfth switch transistor Q12) of the drive control circuit of the second motor to all remain off.

After the self-heating of the battery ends, the vehicle controller may perform step 1903 or step 1904 according to a corresponding instruction.

Step 1903. An external charging device is controlled to directly charge the battery in response to a direct charging instruction.

The vehicle controller may further control the external charging device to directly charge the battery in response to the direct charging instruction.

In an optional implementation of the embodiments of the present disclosure, the vehicle controller may control, in response to the direct charging instruction, the upper bridge switch transistor in the third switch control unit to be turned on, so that the external charging device directly charges the battery.

Optionally, the first charging switch and the second charging switch are controlled to be closed, and at least one upper bridge switch transistor in the drive control circuit of the third motor is controlled to be turned on, so that the external charging device directly charges the battery.

The third switch control unit is the drive control circuit of the third motor.

Optionally, in a case that the external charging device 200 directly charges the battery 10, the vehicle controller may control the upper bridge switch transistors of the third switch control unit to be all turned on and the lower bridge switch transistors to be all turned off.

Referring to FIG. 13, the vehicle controller may control, in response to the direct charging instruction, the first charging switch S1 and the second charging switch S2 to be closed, control at least one upper bridge switch transistor (that is, the thirteenth switch transistor Q13 to the fifteenth switch transistor Q15) in the drive control circuit of the third motor to be turned on, and lower bridge switch transistors (that is, the sixteenth switch transistor Q16 to the eighteenth switch transistor Q18) to be all turned off.

In an optional implementation of the embodiments of the present disclosure, the vehicle controller may control, in response to the direct charging instruction, the second charging switch and the third charging switch to be closed, so that the external charging device directly charges the battery.

Referring to FIG. 17, the vehicle controller may control, in response to the direct charging instruction, the second charging switch S2 and the third charging switch S3 to be closed, to directly charge the battery 10 by the external charging device 200.

Step 1904. In response to a boost charging instruction, a boost unit is controlled to boost a voltage output by the external charging device, to charge the battery.

The vehicle controller may control, in response to the boost charging instruction, the boost unit to boost the voltage output by the external charging device, to charge the battery.

Optionally, the vehicle controller may control the upper bridge switch transistor and the lower bridge switch transistor in the third switch control unit of the boost unit to be alternately turned on and off, to boost the voltage output by the external charging device.

Optionally, the vehicle controller may control the first charging switch and the second charging switch to be closed, and control the upper bridge switch transistor and the lower bridge switch transistor on the same bridge arm in the drive control circuit of the third motor to be alternately turned on and off.

A boost inductor in the boost unit is a winding of the third motor, and the third switch control unit is the drive control circuit of the third motor.

In a case that the external charging device boost charges the battery, the vehicle controller may control the upper bridge switch transistor and the lower bridge switch transistor on at least one phase bridge arm in the drive control circuit of the third motor to be alternately turned on and off.

Referring to FIG. 12, the vehicle controller may control, in response to the boost charging instruction, the sixteenth switch transistor Q16 to the eighteenth switch transistor Q18 in the drive control circuit of the third motor to be turned on, and the thirteenth switch transistor Q13 to the fifteenth switch transistor Q15 to be all turned off.

Then, referring to FIG. 13, the vehicle controller may turn on the thirteenth switch transistor Q13 to the fifteenth switch transistor Q15, and turn off all the sixteenth switch transistor Q16 to the eighteenth switch transistor Q18. As the process repeats, the external charging device 200 can boost charge the battery 10.

In conclusion, the embodiments of the present disclosure provide a control method. In the method, a vehicle controller may control switch transistors in a first switch control unit and a second switch control unit to be alternately turned on and off in a predetermined sequence, to self-heat a battery through charging and discharging of an inductive component unit, thereby avoiding affecting charging and discharging power of the battery in a low-temperature environment.

An embodiment of the present disclosure provides a computer-readable storage medium, having a computer program stored therein. The computer program, when executed by a processor, implements the control method according to the foregoing embodiments, for example, the control method shown in FIG. 18 and FIG. 19.

FIG. 20 is a schematic structural diagram of a vehicle controller according to an embodiment of the present disclosure. As shown in FIG. 20, the vehicle controller 2000 may include a memory 2001, a processor 2002, and a computer program stored in the memory 2001 and executable on the processor 2002. The processor 2002, when executing the computer program, implements the computer method according to the foregoing embodiments, for example, the control method shown in FIG. 18 and FIG. 19.

It should be noted that, the logic and/or steps shown in the flowcharts or described in any other manner herein, for example, a sequenced list that may be considered as executable instructions used for implementing logical functions, may be specifically implemented in any computer-readable medium to be used by an instruction execution system, an apparatus, or a device (for example, a computer-based system, a system including a processor, or another system that can obtain an instruction from the instruction execution system, the apparatus, or the device and execute the instruction) or to be used by combining such instruction execution systems, apparatuses, or devices. In this specification, the "computer-readable medium" may be any apparatus that can include, store, communicate, propagate, or transmit programs to be used by the instruction execution system, apparatus, or device or to be used in combination with the instruction execution system, apparatus, or device. More specific examples (a non-exhaustive list) of the computer-readable medium include the following: an electrical connection portion (an electronic apparatus) having one or more wires, a portable computer diskette (a magnetic apparatus), a random access memory (RAM), a read-only memory (ROM), an erasable programmable read-only memory (EPROM or a flash memory), an optical fiber apparatus, and a portable compact disk read-only memory (CDROM). In addition, the computer-readable medium may be even a piece of paper for printing the program, or another proper medium, because, for example, optical scanning may be performed on the paper or another medium, and then processing is performed by performing editing and decryption, or in another proper manner to obtain the program in an electronic manner. Then the program is stored in a computer memory.

It should be understood that, parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if being implemented by hardware, like in another implementation, the multiple steps or methods may be implemented by any one of following common technologies in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, the description made with reference to terms such as "one embodiment", "some embodiments", "an example", "a specific example", or "some examples" means that a specific characteristic, structure, material, or feature described with reference to the embodiment or example is included in at least one embodiment or example of the present disclosure. In this specification, schematic descriptions of the foregoing terms do not necessarily direct at a same embodiment or example. Moreover, the specific features, structures, materials, or characteristics described may be combined in any one or more embodiments or examples in an appropriate manner.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationships shown based on the accompanying drawings, and are merely used for describing the present disclosure and simplifying the description, rather than indicating or implying that the apparatus or element needs to have a particular orientation or be constructed and operated in a particular orientation, and therefore, should not be construed as a limitation on the present disclosure.

In addition, the terms such as "first" and "second" used in the embodiments of the present disclosure are merely used for the purpose of description, and should not be understood as indicating or implying the relative importance, or implicitly specifying the number of technical features indicated in the embodiments. Therefore, a feature restricted by the terms such as "first" and "second" in an embodiment of the present disclosure may explicitly or implicitly indicate that the embodiment includes at least one such feature. In the descriptions of the present disclosure, the term "multiple" means at least two, or two or more, for example, two, three, or four, unless otherwise specifically limited in detail in the embodiments.

In the present disclosure, unless otherwise clearly specified or limited in the embodiments, the terms "mounted", "connected", "connection", and "fixed" in the embodiments should be understood in a broad sense. For example, a connection may be a fixed connection, a detachable connection, or an integral connection, or it may be understood that the connection may be a mechanical connection, an electrical connection, or the like. Certainly, the connection may alternatively be a direct connection, or an indirect connection through an intermediate medium, or communication inside two elements, or an interaction relationship between two elements. A person of ordinary skill in the art can understand specific meanings of the terms in the present disclosure according to specific embodiments of situations.

In the present disclosure, unless otherwise clearly specified and limited, that a first feature is "above" or "below" a second feature may be that the first and the second features are in contact with each other directly, or the first and the second features are in contact with each other indirectly by using an intermediate medium. Moreover, that the first feature is "on", "above", and "on the top of" the second feature may be that the first feature is directly above or obliquely above the second feature, or merely that the level of the first feature level is higher than that of the second feature. That the first feature is "under", "below", and "on the bottom of" the second feature may be that the first feature is directly below or obliquely below the second feature, or merely that the level of the first feature is lower than that of the second feature.

Although the embodiments of the present disclosure have been shown and described above, it may be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A control circuit, comprising:
a first switch control unit and a second switch control unit; and
an inductive component unit arranged between the first switch control unit and the second switch control unit,
wherein switch transistors in the first switch control unit and the second switch control unit are alternately turned on and off in a predetermined sequence, to self-heat a battery through charging and discharging of the inductive component unit.

2. The control circuit according to claim 1, wherein the first switch control unit and the second switch control unit each comprise an upper bridge switch transistor and a lower bridge switch transistor, a first node is provided between the upper bridge switch transistor and the lower bridge switch transistor in the first switch control unit, a second node is provided between the upper bridge switch transistor and the lower bridge switch transistor in the second switch control unit, and the inductive component unit is connected between the first node and the second node.

3. The control circuit according to claim 2, wherein in a case that the upper bridge switch transistor in the first switch control unit is turned on, the lower bridge switch transistor in the second switch control unit is turned on, wherein the lower bridge switch transistor in the first switch control unit and the upper bridge switch transistor in the second switch control unit remain off; and in a case that the lower bridge switch transistor in the first switch control unit is turned on, the upper bridge switch transistor in the second switch control unit is turned on, wherein the upper bridge switch transistor in the first switch control unit and the lower bridge switch transistor in the second switch control unit remain off.

4. The control circuit according to any one of claims 1 to 3, wherein the inductive component unit comprises a winding of a first motor, a first switch, and a winding of a second motor, and the first switch is connected between a winding neutral point of the first motor and a winding neutral point of the second motor, wherein in a case that the first switch is closed, the winding of the first motor and the winding of the second motor are charged and discharged based on the alternate turning on and off of the switch transistors in the first switch control unit and the second switch control unit.

5. The control circuit according to claim 4, wherein the first switch control unit is a drive control circuit of the first motor, and the second switch control unit is a drive control circuit of the second motor,
preferably wherein when at least one upper bridge switch transistor in the drive control circuit of the first motor is turned on, at least one lower bridge switch transistor in the drive control circuit of the second motor is turned on; and when at least one lower bridge switch transistor in the drive control circuit of the first motor is turned on, at least one upper bridge switch transistor in the drive control circuit of the second motor is turned on.

6. The control circuit according to any one of claims 1 to 3, further comprising:
a precharging unit, connected to a direct current bus after being connected in series to the battery, to precharge a bus capacitor connected to the direct current bus based on power supply from the battery.

7. The control circuit according to any one of claims 1 to 3, further comprising:
a boost unit, configured to boost a voltage output by an external charging device, to charge the battery,
preferably wherein the boost unit comprises:
a boost inductor, one end of the boost inductor being connected to a positive terminal of the external charging device; and
a third switch control unit, a third node being provided between an upper bridge switch transistor and a lower bridge switch transistor in the third switch control unit, and the third node being connected to the other end of the boost inductor,
wherein the upper bridge switch transistor and the lower bridge switch transistor in the third switch control unit are alternately turned on and off, to boost the voltage output by the external charging device,
more preferably wherein the boost inductor is a winding of a third motor, the third switch control unit is a drive control circuit of the third motor, a winding neutral point of the third motor is connected to the positive terminal of the external charging device through a first charging switch, and a negative terminal of the drive control circuit of the third motor is connected to a negative terminal of the external charging device through a second charging switch,
wherein in a case that the first charging switch and the second charging switch are closed, an upper bridge switch transistor and a lower bridge switch transistor on a same bridge arm in the drive control circuit of the third motor are alternately turned on and off, for the external charging device to boost charge the battery,
most preferably further comprising:
a third charging switch, one end of the third charging switch being connected to a positive direct current bus, and the other end of the third charging switch being connected to the positive terminal of the external charging device,
wherein in a case that the second charging switch and the third charging switch are closed, the external charging device directly charges the battery.

8. A control method, comprising:
controlling, in response to a battery self-heating instruction, switch transistors in a first switch control unit and a second switch control unit to be alternately turned on and off in a predetermined sequence, to self-heat a battery through charging and discharging of an inductive component unit, wherein the inductive component unit is arranged between the first switch control unit and the second switch control unit.

9. The method according to claim 8, wherein controlling the switch transistors in the first switch control unit and the second switch control unit to be alternately turned on and off in the predetermined sequence comprises:
controlling a lower bridge switch transistor in the second switch control unit to be turned on when controlling an upper bridge switch transistor in the first switch control unit to be turned on, wherein the lower bridge switch transistor in the first switch control unit and the upper bridge switch transistor in the second switch control unit remain off; and
controlling an upper bridge switch transistor in the second switch control unit to be turned on when controlling a lower bridge switch transistor in the first switch control unit to be turned on, wherein the upper bridge switch transistor in the first switch control unit and the lower bridge switch transistor in the second switch control unit remain off.

10. The method according to claim 8, wherein controlling the switch transistors in the first switch control unit and the second switch control unit to be alternately turned on and off in the predetermined sequence comprises:
controlling at least one lower bridge switch transistor in a drive control circuit of a second motor to be turned on when controlling at least one upper bridge switch transistor in a drive control circuit of a first motor to be turned on; and
controlling at least one upper bridge switch transistor in the drive control circuit of the second motor to be turned on when controlling at least one lower bridge switch transistor in the drive control circuit of the first motor to be turned on,
wherein the first switch control unit is the drive control circuit of the first motor, and the second switch control unit is the drive control circuit of the second motor.

11. The method according to any one of claims 8 to 10, further comprising:
controlling a precharging unit in response to a precharging instruction, to precharge a bus capacitor connected to a direct current bus based on power supply from the battery.

12. The method according to any one of claims 8 to 10, further comprising:
controlling a boost unit to boost a voltage output by an external charging device in response to a boost charging instruction, to charge the battery,
preferably wherein controlling the boost unit to boost the voltage output by the external charging device comprises:
controlling an upper bridge switch transistor and a lower bridge switch transistor in a third switch control unit of the boost unit to be alternately turned on and off, to boost the voltage output by the external charging device,
more preferably wherein controlling the upper bridge switch transistor and the lower bridge switch transistor in the third switch control unit of the boost unit to be alternately turned on and off comprises:
controlling a first charging switch and a second charging switch to be closed; and
controlling the upper bridge switch transistor and the lower bridge switch transistor on a same bridge arm in a drive control circuit of a third motor to be alternately turned on and off,
wherein a boost inductor in the boost unit is a winding of the third motor, and the third switch control unit is the drive control circuit of the third motor,
most preferably further comprising:
controlling, in response to a direct charging instruction, the second charging switch and a third charging switch to be closed, for the external charging device to directly charge the battery.

13. A computer-readable storage medium, having a computer program stored therein, the computer program, when executed by a processor, implementing the control method according to any one of claims 8 to 12.

14. A vehicle controller, comprising: a memory, a processor, and a computer program stored in the memory and executable on the processor, the processor, when executing the computer program, implementing the control method according to any one of claims 8 to 12.

15. An electric vehicle, comprising:
the control circuit according to any one of claims 1 to 7; or
the vehicle controller according to claim 14.
